# EUROPÄISCHE PATENTSCHRIFT

(11) **EP 3 827 176 B1**
(45) Veröffentlichungstag und Bekanntmachung des Hinweises auf die Patenterteilung: **15.01.2025**
(21) Anmeldenummer: 19736346.8
(22) Anmeldetag: 02.07.2019
(51) Int. Cl.: F16B 13/06

(54) **SPREIZANKER**
EXPANSION BOLT
ÉLÉMENT D'ANCRAGE À EXPANSION

(30) Priorität: 23.07.2018 DE 102018117693
(43) Veröffentlichungstag der Anmeldung: 02.06.2021
(73) Patentinhaber: fischerwerke GmbH & Co. KG, 72178 Waldachtal (DE)
(72) Erfinder: LINKA, Martin, 72160 Horb a.N. (DE)
(86) Internationale Anmeldenummer: PCT/EP2019/067672
(87) Internationale Veröffentlichungsnummer: WO 2020/020582

(56) Entgegenhaltungen:
- EP-A1- 0 599 026
- EP-A1- 3 118 469
- EP-B1- 1 377 753
- CN-U- 206 017 363
- DE-A1- 102004 053 255

## Beschreibung

Die Erfindung betrifft einen Spreizanker mit den Merkmalen des Oberbegriffs des Anspruchs 1.

Aus der Offenlegungsschrift DE 10 2004 053 255 A1 ist ein gattungsgemäßer Spreizanker bekannt. Der Spreizanker ist ein sogenannter Bolzenanker, der zur Befestigung eines Anbauteils an einem Verankerungsgrund in ein Bohrloch im Verankerungsgrund eingebracht wird. Der Bolzenanker weist einen einstückigen Ankerschaft mit einem Außengewinde an seinem hinteren Ende und mit einem konusförmigen Spreizkörper an seinem vorderen Ende auf. In einem im Durchmesser reduzierten Halsabschnitt des Ankerschafts ist eine Spreizhülse des Spreizankers angeordnet. Zur Verankerung des Spreizankers im Bohrloch wird der vordere Teil des Spreizankers, an dem die Spreizhülse angeordnet ist, in das Bohrloch eingetrieben, sodass die Spreizhülse im Bohrloch verspannt. Durch eine Rückbewegung des Ankerschafts wird der Spreizkörper in die Spreizhülse eingezogen, wodurch die Spreizhülse aufspreizt und mit ihrem vorderen Ende gegen die Wand des Bohrlochs gepresst wird. Damit die Spreizhülse einen möglichst guten Halt im Bohrloch findet, weist die Spreizhülse durch Schlitze getrennte Spreizsegmente auf, die an ihrem vorderen Ende in einem ringstufenförmigen Endabschnitt durch Prägen in ihrer Wanddicke reduziert sind. Durch das Prägen sind zwei Kanten entstanden, die in zwei parallelen und in Richtung der Längsachse voneinander beabstandeten Radialebenen liegen. Die Kanten werden beim Aufspreizen gegen die Bohrlochwand gedrückt und schneiden in die Bohrlochwand linienförmig ein, was den Halt der Spreizhülse im Bohrloch verbessert.

Aufgabe der Erfindung ist es, einen Spreizanker vorzuschlagen, bei dem der Halt der Spreizhülse im Bohrloch noch weiter verbessert ist.

Diese Aufgabe wird erfindungsgemäß durch einen Spreizanker mit den Merkmalen des Anspruchs 1 gelöst. Der erfindungsgemäße Spreizanker weist einen Ankerschaft und eine Spreizhülse auf. Der Ankerschaft erstreckt sich entlang einer Längsachse von einem hinteren Ende in Einbringrichtung nach vorn. Die Einbringrichtung ist die Richtung, in die der Spreizanker planmäßig in ein Bohrloch eingebracht wird. "Vorne" und "hinten" beziehen sich hier und nachfolgend auf die Einbringrichtung. Ein vorderes Ende des Spreizankers ist demnach der Teil des Spreizankers, der beim Eintreiben des Spreizankers in ein Bohrloch zuerst in das Bohrloch gelangt. Der Ankerschaft weist einen Spreizkörper auf, der sich insbesondere in Einbringrichtung nach vorn und/oder von der Spreizhülse weg im Durchmesser erweitert, wobei mit "Durchmesser" der Durchmesser eines den Querschnitt des Spreizkörpers umschreibenden Kreises gemeint ist, dessen Mittelpunkt auf der Längsachse liegt. Der Spreizkörper bildet insbesondere das vordere Ende des Ankerschafts. Die Spreizhülse kann durch Einziehen des Spreizkörpers in die Spreizhülse oder durch ein Aufschieben der Spreizhülse auf den Spreizkörper aufgespreizt werden. Das Aufspreizen der Spreizhülse erfolgt demnach durch eine Relativbewegung des Spreizkörpers zur Spreizhülse, durch die der Spreizkörper in die Spreizhülse eindringt und diese radial zur Längsachse und von dieser weg nach außen drängt. Hierfür weist der Spreizkörper insbesondere die Form eines Spreizkonus auf.

Damit die Spreizhülse beim Einziehen des Spreizkörpers leicht aufgespreizt werden kann, weist die Spreizhülse mehrere Spreizsegmente auf, die durch Schlitze in Umfangsrichtung voneinander getrennt sind, die Spreizhülse weist also im Bereich der Spreizsegmente keinen geschlossenen Umfang auf. Die Schlitze können insbesondere parallel zur Längsachse verlaufen. Sie verlaufen insbesondere nur über einen Teil der axialen Länge der Spreizhülse, sodass die Spreizsegmente über einen ringförmigen Verbindungsabschnitt einstückig miteinander verbunden sind.

Mindestens eines, insbesondere jedes, der Spreizsegmente weist einen Endabschnitt mit einer verringerten Wanddicke auf, der in einem nicht gespreizten Zustand dem Spreizkörper zugewandt ist und/oder an diesem anliegt. Der Endabschnitt ist auf der Außenseite der Spreizhülse in Längsrichtung durch zwei der Schlitze und in Umfangsrichtung durch eine erste Kante und eine zweite Kante begrenzt. Das bedeutet, dass die beiden Schlitze in Längsrichtung orientiert sind und die beiden Kanten in Umfangsrichtung. Allerdings schließt dies nicht aus, dass die Schlitze ganz oder abschnittsweise geneigt oder quer zur Längsrichtung und/oder die Kanten ganz oder abschnittsweise geneigt oder quer zur Umfangsrichtung verlaufen. Mit "Außenseite" ist die der Längsachse abgewandte, in Umfangs- und Längsrichtung verlaufende Fläche der Spreizhülse gemeint. Die erste Kante und die zweite Kante sind voneinander in Längsrichtung beabstandet und erstrecken sich in Umfangsrichtung von einem ersten der Schlitze zu einem anderen der Schlitze anderen. Insbesondere bildet die zweite Kante das freie Ende eines Spreizsegments, das dem Spreizkörper zugewandt ist. Dagegen kennzeichnet die erste Kante den Übergang von einem hinteren Teil der Spreizhülse zum Endabschnitt, der in einer Art Stufe erfolgt, an der sich die Wanddicke der Spreizhülse auf die Wanddicke des reduzierten Endabschnitts verringert. Die Stufe ist somit Teil des Endabschnitts. Die Stufe kann stetig oder unstetig, als zur Längsachse geneigte Fläche oder als abrupter rechtwinkliger Übergang in den Endabschnitt übergehen. Bei einem stetigen Übergang kann die Kante zwischen Stufe und Endabschnitt und/oder zwischen Stufe und hinterem Teil gerundet sein. Beispielsweise kann sie als treppenartige, um die Spreizhülse umlaufende Ringstufe ausgeführt sein.

Der Spreizanker kann insbesondere ein Bolzenanker sein, mit einem einstückigen Ankerschaft, an dessen vorderem Ende der Spreizkörper angeordnet ist. Der Ankerschaft ist bei einem Bolzenanker insbesondere einstückig und weist hinten ein Lastangriffsmittel auf, mit dem eine Kraft von einem Anbauteil auf den Spreizanker übertragen werden kann. Das Lastangriffsmittel ist insbesondere ein Gewinde, auf das eine Mutter zum Befestigen des Anbauteils aufgeschraubt, oder, im Fall eines Innengewindes, eine Schraube eingeschraubt werden kann. Alternativ kann der Spreizanker auch als Hülsenanker ausgebildet sein, bei dem der Spreizkörper des Ankerschafts im Regelfall eine Konusmutter ist, die zum Verspreizen der Spreizhülse nach hinten, also entgegen der Einbringrichtung, auf ein Gewinde einer Schraube aufgeschraubt wird. Die Schraube bildet ebenfalls einen Teil des Ankerschafts eines Hülsenankers. Unabhängig davon, ob der Spreizanker als Bolzen- oder als Hülsenanker ausgebildet ist, ist die Spreizhülse insbesondere in einem Spreizbereich vorn am Spreizanker angeordnet. Sie ist insbesondere einstückig aus einem Blech in Umfangsrichtung um den Ankerschaft herum gebogen, wie dies für Bolzenanker typisch ist. Alternativ kann die Spreizhülse aus einem Rohr gefertigt sein, wie dies bei Hülsenankern üblich ist.

Erfindungsgemäß verläuft die erste Kante in Form eines Bogens zwischen den beiden Schlitzen und die zweite Kante verläuft in Form eines Bogens zwischen den beiden Schlitzen. Mit "Bogen" ist hier allgemein eine gekrümmte Kurve gemeint, die in einer gedachten Abwicklung der Spreizhülse in einer Ebene keine Gerade ergibt. Durch den bogenförmigen Verlauf liegen die Punkte einer Kante, also alle Punkte, die geometrisch die Kante bilden, nicht mehr gemeinsam in einer Radialebene zur Längsachse, sondern ein Scheitel des Bogens ist axial versetzt zu mindestens einem der Endpunkte. Ein "Endpunkt" ist der Punkt, an dem die Kante an einem der Schlitze beginnt beziehungsweise endet. Insbesondere ist der Scheitel axial zu beiden Endpunkten versetzt angeordnet, so dass er das vordere oder das hintere Ende des Bogens bildet. Hierdurch liegt beispielsweise der Scheitel der zweiten Kante beim Aufspreizen in Einbringrichtung näher am Spreizkörper, als die beiden Endpunkte der zweiten Kante, so dass der Scheitel früher und im Ergebnis stärker gegen die Wand eines Bohrlochs gedrückt wird, als die Endpunkte, was bevorzugt ist. Allgemein werden durch den bogenförmigen Verlauf einzelne Punkte, insbesondere der Scheitel und/oder die Endpunkte, stärker an die Bohrlochwand gedrückt, so dass es punktuell zu Spannungsspitzen kommt, was den Einschnitt beziehungsweise das Eindrücken der Kante in die Bohrlochwand verbessert.

Vorzugsweise werden die Kanten durch einen Prägevorgang hergestellt. Beim Prägen wird das Material eines Ausgangskörpers für die Herstellung der Spreizhülse durch Krafteinwirkung verdrängt und umgeformt, was eine Erhöhung der Festigkeit des Metalls der Spreizhülse im Endabschnitt und insbesondere im Bereich der Kanten bewirkt. Durch Prägen ist zudem eine kostengünstige Herstellung der Spreizhülse des erfindungsgemäßen Spreizankers möglich.

Insbesondere verläuft die Kante von einem der Endpunkte zumindest bis zu einem Mittelpunkt der Kante bogenförmig. Der "Mittelpunkt" liegt dagegen in Umfangsrichtung in einer Axialebene, in der die Längsachse des Spreizankers liegt und die zu den beiden Endpunkten den gleichen Abstand aufweist.

Insbesondere verläuft die Kante von einem ersten Endpunkt der Kante zum Mittelpunkt der Kante in einem ersten Bogenabschnitt, der, bezogen auf eine Axialebene in der der Mittelpunkt liegt, symmetrisch zu einem zweiten Bogenabschnitt ist, der vom zweiten Endpunkt der Kante zum Mittelpunkt hin verläuft. Der Mittelpunkt bildet in diesem Fall den Scheitel des Bogens. Dies erleichtert die Herstellung, insbesondere die Herstellung durch Prägen, da beim Prägen das Material zum Mittelpunkt hin stärker verdrängt beziehungsweise mehr Material bewegt wird, als zu den Endpunkten hin. Insbesondere gehen die beiden Bogenabschnitte am Scheitel kontinuierlich ineinander über. Alternativ können sie einen spitz zulaufenden Scheitel bilden.

In einer bevorzugten Ausgestaltungsform des erfindungsgemäßen Spreizankers sind die erste und die zweite Kante in Längsrichtung in die gleiche Richtung gewölbt. Das bedeutet, dass bei beiden Kanten jeweils der Scheitel des Bogens, bezogen auf die Längsachse, in die gleiche Richtung gegenüber den jeweiligen Endpunkten versetzt ist. Die Kanten können bei dieser Ausgestaltungsform so eng beieinander angeordnet sein, dass sie sich beim Eindrücken in die Bohrlochwand gegenseitig unterstützen und sich die durch eine Kante erzeugten Spannungen in der Bohrlochwand mit den durch die zweite Kante induzierten Spannungen überlagert, was insbesondere bei harten Baustoffen, wie hochfesten Betonen, von Vorteil ist.

Alternativ sind die beiden Kanten in Längsrichtung in entgegengesetzte Richtungen gewölbt, wodurch die beiden Scheitel der Kanten weiter voneinander beabstandet sind, als die Endpunkte der Kanten. Hierdurch wird die Fläche des Endabschnitts vergrößert, der flächig an der Bohrlochwand anliegen kann, was bei weicheren Baustoffen, wie Normalbeton, niederfestem Beton oder Kalksandstein, von Vorteil ist, da dies einer lokalen Zerstörung der Bohrlochwand entgegenwirkt. Zudem greifen die Kanten an räumlich getrennten Stellen ohne Wechselwirkung an der Bohrlochwand an, was Inhomogenitäten in der Oberfläche der Bohrlochwand ausgleicht.

In einer bevorzugen Ausgestaltungsform des erfindungsgemäßen Spreizankers ist mindestens eine der Kanten als Kreisbogen gewölbt. Dies erleichtert die Herstellung, insbesondere die Herstellung durch Prägen, da beim Prägen das Material annähernd kreisförmig verdrängt werden kann. Insbesondere erstreckt sich der Kreisbogen von einem ersten Endpunkt der Kante zum zweiten Endpunkt. Der Mittelpunkt des Kreisbogens liegt insbesondere in einer gedachten Abwicklung auf der Außenfläche der Spreizhülse.

In einer weiteren bevorzugten Ausgestaltungsform des erfindungsgemäßen Spreizankers sind beide Kanten als Kreisbogen gewölbt, wobei beide Kreisbögen unterschiedliche Radien und insbesondere unterschiedliche Mittelpunkte aufweisen. Insbesondere ist der Radius der Kante, die das freie Ende des Endabschnitts bildet, kleiner als der Radius der Kante, die den Endabschnitt im Bereich der Stufe begrenzt.

Bevorzugt ist weiterhin, dass die Schlitze im Bereich des Endabschnitts in Umfangsrichtung aufgeweitet sind. Insbesondere ist die in Umfangsrichtung gemessene Breite eines Spreizsegments im Bereich des Endabschnitts kleiner, als die Breite an einer breitesten Stelle des Spreizsegments. Hierdurch lässt sich der Endabschnitt beim Aufspreizen leichter radial nach außen biegen und gegen die Bohrlochwand pressen. Zudem können durch eine entsprechend geformte Aufweitung der Schlitze zusätzliche Kanten am Spreizsegment entstehen, die beim Aufspreizen zusätzlich in Wirkkontakt mit der Bohrlochwand kommen und die Reibung und damit den Halt der Spreizhülse im Bohrloch zusätzlich erhöhen.

Weiterhin ist bevorzugt, dass der Endabschnitt zum vorderen Ende hin radial von der Längsachse weg verläuft. Der Endabschnitt ist somit bereits vor dem Aufspreizen radial nach außen gebogen, was ein Einziehen des Spreizkörpers in die Spreizhülse erleichtert.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination verwendbar. Es sind Ausführungen der Erfindung möglich, die nicht alle Merkmale eines abhängigen Anspruchs aufweisen.

Die Erfindung wird nachfolgend anhand der Zeichnung näher erläutert. Es zeigen:
- Figur 1: einen erfindungsgemäßen Spreizanker mit einer ersten Spreizhülse in einer Seitenansicht;
- Figur 2: eine vergrößerte Darstellung des Spreizabschnitts des Spreizankers der Figur 1;
- Figur 3: eine Draufsicht auf die Außenseite einer Abwicklung der ersten Spreizhülse;
- Figur 4: einen Schnitt entlang der Linie IV-IV der Figur 3;
- Figur 5: eine vergrößerte Darstellung des Endabschnitts einer Spreizhülse eines zweiten erfindungsgemäßen Spreizankers;
- Figur 6: eine Draufsicht auf die Außenseite einer Abwicklung einer Spreizhülse eines Spreizankers; und
- Figur 7: eine Draufsicht auf die Außenseite einer Abwicklung einer Spreizhülse eines dritten erfindungsgemäßen Spreizankers.

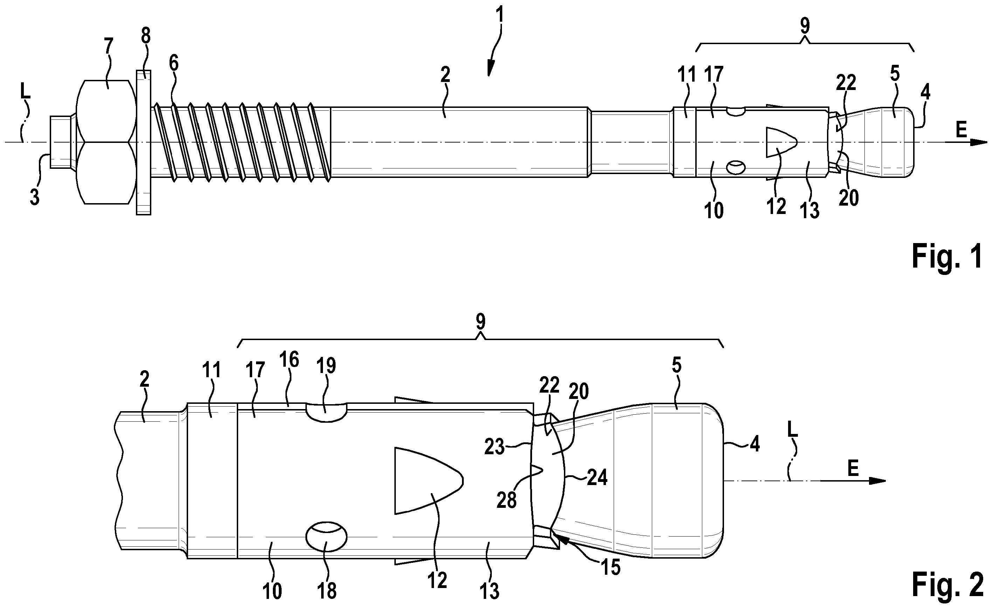

In den Figuren 1 bis 4 ist ein erster erfindungsgemäßer Spreizanker 1 dargestellt. Der Spreizanker 1 ist als Bolzenanker ausgebildet und weist einen einstückigen Ankerschaft 2 aus Stahl auf, der sich von einem hinteren Ende 3 entlang einer Längsachse L in Einbringrichtung E bis zu einem vorderen Ende 4 erstreckt, das von einem als Spreizkörper 5 wirkenden Spreizkonus gebildet wird. Der Spreizkörper 5 ist einstückiger Bestandteil des Ankerschafts 2 und erweitert sich in Einbringrichtung E in seinem Durchmesser. Hinten am Ankerschaft 2 ist ein Außengewinde 6 als Lastangriffsmittel angeordnet, auf das eine Mutter 7 aufgeschraubt und an dem eine Unterlegscheibe 8 angeordnet ist. Vorne am Spreizanker 1 ist ein Spreizbereich 9 ausgebildet, an dem eine Spreizhülse 10 aus Stahl angeordnet ist. Die Spreizhülse 10 stützt sich beim Eintreiben in ein Bohrloch (nicht dargestellt) entgegen der Einbringrichtung E an einem Anschlagbund 11 ab. Nach dem Einbringen in ein Bohrloch wird die Spreizhülse 10 durch keilförmige Haltevorsprünge 12 im Bohrloch gehalten, sodass der Spreizkörper 5 durch eine Bewegung des Ankerschafts 2 gegen die Einbringrichtung E aus dem Bohrloch heraus in die Spreizhülse 10 eingezogen wird, wodurch die Spreizhülse 10 in ihrem vorderen Bereich aufspreizt, sich im Durchmesser erweitert und gegen die Bohrlochwand gepresst wird. Genauer gesagt, werden Spreizsegmente 13 der Spreizhülse 10 durch den Spreizkörper 5 radial nach außen gedrückt.

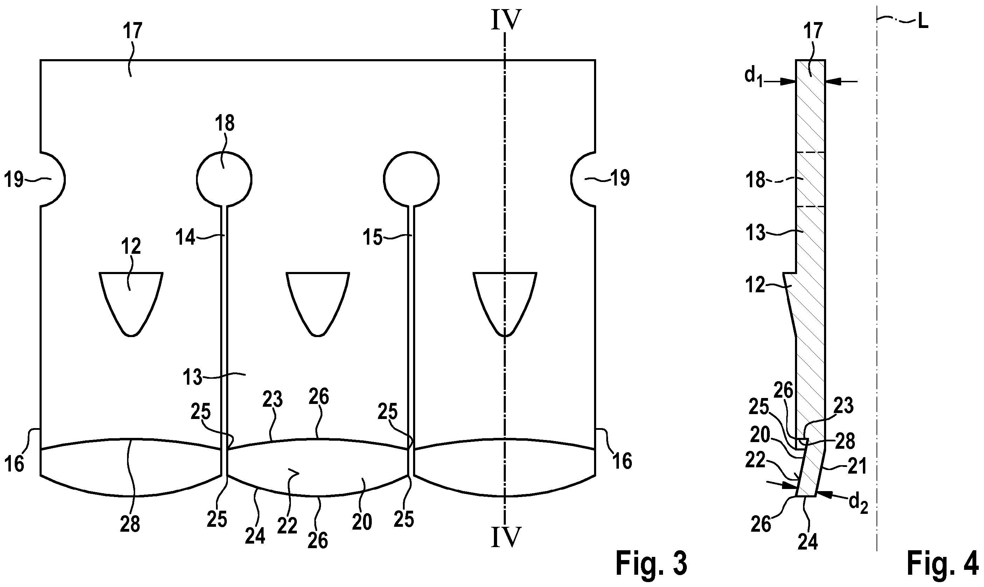

Diese Spreizsegmente 13 werden dadurch ausgebildet, dass die Spreizhülse 10 vom vorderen Ende her an zwei Stellen über zwei Drittel ihrer axialen Länge parallel zur Längsachse L geschlitzt wird. Da die Spreizhülse 10 aus einem flachen Blech hergestellt und um den Ankerschaft 2 des Spreizankers 1 in Umfangsrichtung gebogen wird, weist die gebogene Spreizhülse 10 drei Schlitze 14, 15, 16 auf, von denen ein dritter Schlitz 16 die Spreizhülse 13 in ihrer gesamten Länge durchtrennt, während die ersten beiden Schlitze 14, 15 vom vorderen Ende her nur zwei Drittel der Spreizhülse 10 durchtrennen, sodass ein ringförmiger Verbindungabschnitt 17 entsteht, der sich in Umfangsrichtung erstreckt, und von dem die drei Spreizsegmente 13 in axialer Richtung abstehen. Wie in Figur 3 zu sehen ist, erstrecken sich die ersten beiden Schlitze 14, 15 jeweils bis zu einer zylindrischen Durchgangsöffnung 18, die das hintere Ende der ersten beiden Schlitze 14, 15 darstellt und die gegenüber den Schlitzen 14, 15 vergrößert ist. Im Bereich des dritten, durchgehenden Schlitzes 16 weist die Spreizhülse 10 jeweils halbkreisförmige Ausstanzungen 19 auf (Figur 3), die im gebogenen Zustand einen kreisförmigen Durchgang bilden (Figur 1).

Jedes der Spreizsegmente 13 weist einen vorderen Endabschnitt 20 mit einer Wanddicke d2 auf, die gegenüber der Wanddicke d1 des hinteren Teils der Spreizhülse 10 mit dem Verbindungsabschnitt 17 und den hinteren, sich entgegen der Einbringrichtung E an die Endabschnitte 20 anschließenden Teilen der Spreizsegmente 13 reduziert ist (Figur 4). Die Dicke d2 wurde durch einen Prägevorgang reduziert, bei dem das Ausgangsmaterial, ein Stahlblech, zusammengestaucht und kalt umgeformt worden ist. Wie in Figur 1 zu sehen, sind die Endabschnitte 20 in einem nicht gespreizten Zustand dem Spreizkörper 5 zugewandt. Zudem verläuft der Endabschnitt 20 zum vorderen Ende 4 des Ankerschafts 2 hin radial von der Längsachse 20 weg (Figur 4), so dass der Endabschnitt 20 bereits im nicht aufgespreizten Zustand mit seiner dem Ankerschaft 2 zugewandten Innenseite 21 am Spreizkörper 5 flächig anliegt.

Die Endabschnitte 20 werden auf ihren dem Ankerschaft 2 abgewandten Außenseiten 22 in Längsrichtung durch jeweils zwei der Schlitze 14, 15, 16 begrenzt. In Umfangsrichtung begrenzt eine erste, hintere Kante 23 und eine zweite, vordere Kante 24 den Endabschnitt. Die Kanten 23 und 24 sind in Längsrichtung voneinander beabstandet. Die beiden Kanten 23, 24 erstrecken sich beide in Umfangsrichtung von jeweils einem der beiden die jeweilige Außenseite 22 begrenzenden Schlitze 14, 15, 16 zum jeweils anderen Schlitz 14, 15, 16. So erstreckt sich die erste Kante 23 des mittleren Spreizsegments 13 der Figur 3 zwischen dem ersten Schlitz 14 und dem zweiten Schlitz 15, ebenso die zweite Kante 24. Ausgehend von der hinteren Kante 23 ist die Dicke des Endabschnitt 20 über eine Stufe 28, die orthogonal zur Längsachse L verläuft, auf die Dicke d2 reduziert.

Im Beispiel der Figuren 1 bis 4 erstrecken sich die beiden Kanten 23, 24 jeweils in Form eines Bogens zwischen den beiden Schlitzen 14, 15, 16, die den jeweiligen Endabschnitt 20 begrenzen. Die beiden Kanten 23, 24 sind bei allen drei Endabschnitten 20 gleich ausgeführt und erstrecken sich jeweils als Kreisbogen von einem Endpunkt 25, der den Übergang von einem der Schlitze 14, 15, 16 zu einer der Kanten 23, 24 beziehungsweise den Anfang einer der Kanten 23, 24 kennzeichnet, über einen mittigen Scheitel 26 des jeweiligen Kreisbogens zu einem weiteren Endpunkt 25, der die jeweilige Kante 23, 24 auf der gegenüberliegenden Seite des Spreizsegments 13 am Übergang zum nächsten Schlitz 14, 15, 16, begrenzt, beziehungsweise das Ende der Kante 23, 24 kennzeichnet. Die beiden Kanten 23, 24 bilden scharfkantige Elemente zum Eingriff in die Wand des Bohrlochs, wobei der Scheitel 26 der zweiten Kante 24 beim Aufspreizen als erstes Element der zweiten Kante 24 punktuell mit der Wand des Bohrlochs in Kontakt kommt. Im Fall des ersten Ausführungsbeispiels gemäß der Figuren 1 bis 4 sind die beiden kreisbogenförmigen Kanten 23, 24 in entgegengesetzte Richtung gewölbt und weisen unterschiedliche Radien auf. So ist der Radius der ersten Kante 23 größer als der Radius der zweiten Kante 24, sodass der Scheitel 26 der zweiten Kante 24, der in Einbringrichtung E vor den Endpunkten 25 der zweiten Kante 24 liegt, in Längsrichtung weiter von den Endpunkten 25 der zweiten Kante 24 entfernt ist, als die Endpunkte 25 der ersten Kante 23 vom Scheitel 26 der ersten Kante 23, der hinter diesen Endpunkten 25 angeordnet ist.

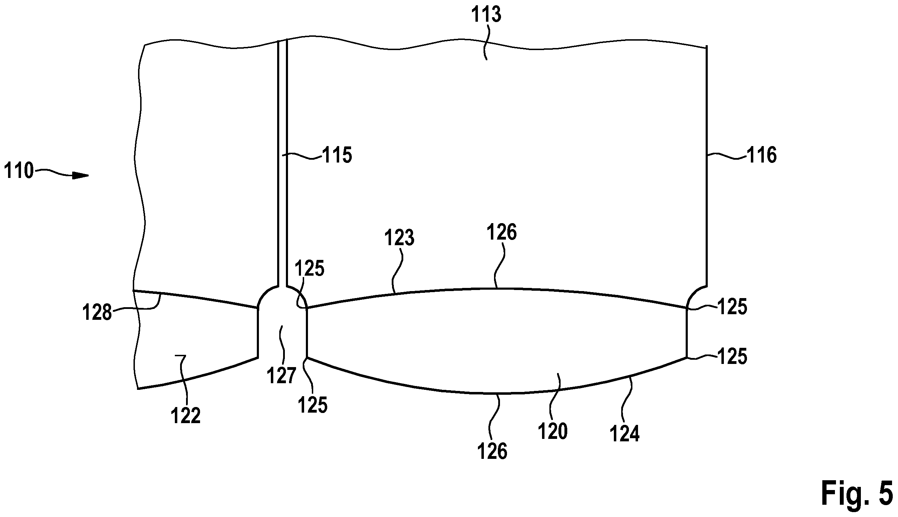

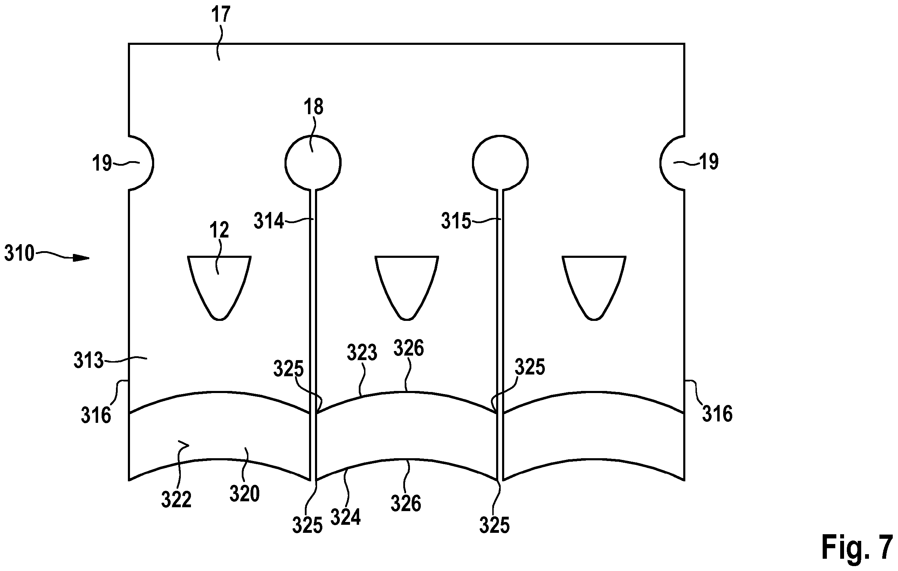

In den Figuren 5 und 7 sind alternative Spreizhülsen 110, 310 für einen erfindungsgemäßen Spreizanker dargestellt. Um Wiederholungen zu vermeiden, wird nachfolgend nur auf die Unterschiede zu der oben beschriebenen Spreizhülse 10 eingegangen.

Die in Figur 5 dargestellte Spreizhülse 110 unterscheidet sich von der Spreizhülse der Figuren 1 bis 4 allein dadurch, dass die Schlitze 115, 116 (114 nicht dargestellt) an ihren in Einbringrichtung E vorderen Enden jeweils eine Aufweitung 127 aufweisen, durch die die Breite der Endabschnitte 120 der Spreizsegmente 113 in Umfangsrichtung verringert ist, was das Aufbiegen des Endabschnitts 120 beim Verspreizen erleichtert und ein Anpressen des Scheitels 126 der zweiten Kante 124 gegen die Wand eines Bohrlochs schon bei geringen Spreizkräften ermöglicht.

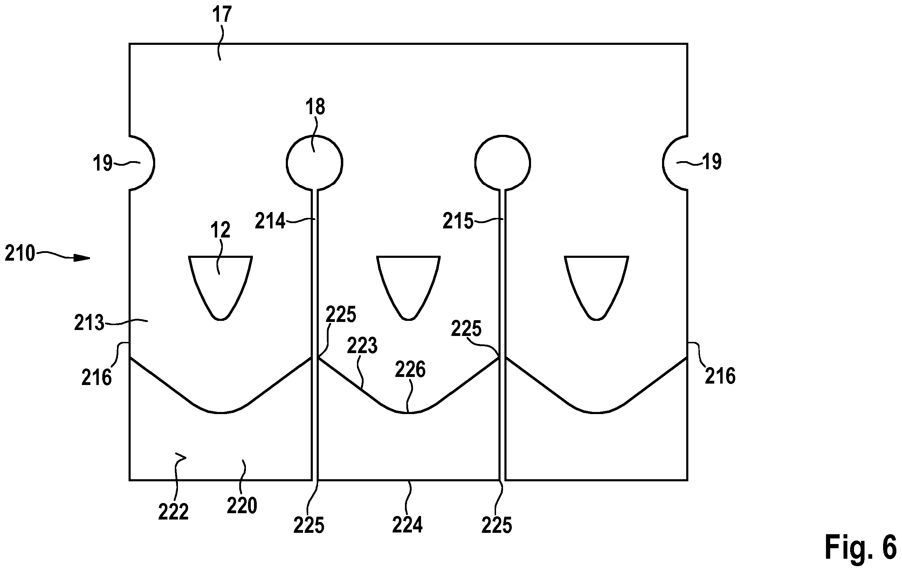

Dagegen ist in Figur 6 eine Spreizhülse 210 dargestellt, die nicht zur Erfindung gehört, bei der die vordere zweite Kante 224 des Endabschnitts 220 in Umfangsrichtung gerade verläuft, wohingegen die hintere erste Kante 223 des Endabschnitts 220 zwischen ihren Endpunkten 225 in Form eines Spitzbogens verläuft, der aus zwei Geradenabschnitten besteht, die durch einen gerundeten Scheitel 226 verbunden sind.

Die Figur 7 zeigt eine Spreizhülse 310, bei der die beiden Kanten 323, 324 jedes Endabschnitts 320 den gleichen Radius aufweisen und in die gleiche Richtung, nämlich entgegen der Einbringrichtung E nach hinten, gewölbt sind. In diesem Fall greifen die vorderen beiden Endpunkte 325 der zweiten vorderen Kante 324 beim Aufspreizen als erste in die Bohrlochwand ein und sorgen für sicheren Halt des Spreizankers im Bohrloch.

Die alternativen Spreizhülsen 10, 110, 310 für einen erfindungsgemäßen Spreizanker sind alle durch Prägen kostengünstig herstellbar, sodass mit ihnen leistungsfähige, durch die unterschiedliche Ausgestaltung auf den jeweiligen Baustoff abgestimmte, kostengünstige Spreizanker herstellbar sind.

### Bezugszeichenliste

### Spreizanker

- 1: Spreizanker
- 2: Ankerschaft
- 3: hinteres Ende des Ankerschafts 2
- 4: vorderes Ende des Ankerschafts 2
- 5: Spreizkörper
- 6: Außengewinde
- 7: Mutter
- 8: Unterlegscheibe
- 9: Spreizbereich
- 10, 110, 210 310: Spreizhülse
- 11: Anschlagbund
- 12: Haltevorsprung
- 13, 113, 213, 313: Spreizsegment
- 14, 114, 214, 314: erster Schlitz
- 15, 115, 215, 315: zweiter Schlitz
- 16, 116, 216, 316: dritter Schlitz
- 17: Verbindungsabschnitt
- 18: Durchgangsöffnung
- 19: Ausstanzung
- 20, 120, 220, 320: Endabschnitt
- 21: Innenseite des Endabschnitts 20
- 22, 122, 222 322: Außenseite des Endabschnitts 20, 120, 220, 320
- 23, 123, 223, 323: erste Kante
- 24, 124, 224, 324: zweite Kante
- 25, 125, 225, 325: Endpunkt
- 26, 126, 226, 326: Scheitel
- 127: Aufweitung
- 28, 128, 228, 328: Stufe
- d1: erste Wanddicke
- d2: zweite Wanddicke
- E: Einbringrichtung des Spreizankers 1 in ein Bohrloch
- L: Längsachse des Ankerschafts 2

## Patentansprüche

1. Spreizanker (1) der einen Ankerschaft (2) mit einem Spreizkörper (5) und eine Spreizhülse (10, 110, 210, 310) aufweist,
wobei sich der Ankerschaft (2) von einem hinteren Ende (3) in Einbringrichtung (E) nach vorn entlang einer Längsachse (L) erstreckt,
wobei die Spreizhülse (10, 110, 210, 310) in einem Spreizbereich (9) des Spreizankers (1) vorn am Ankerschaft (2) angeordnet ist und mehrere Spreizsegmente (13, 113 213, 313) aufweist, die durch Schlitze in Umfangsrichtung voneinander getrennt sind,
wobei mindestens eines der Spreizsegmente (13, 113, 213, 313) ein Endabschnitt (20, 120, 220, 320) verringerter Wanddicke aufweist, der in einem nicht gespreizten Zustand dem Spreizkörper (5) zugewandt ist und der auf der Außenseite in Längsrichtung durch zwei der Schlitze (14, 15, 16) und in Umfangsrichtung durch eine erste Kante (23, 123, 223, 323) und eine zweite Kante (24, 124, 224, 324) begrenzt ist, wobei die zwei Kanten (23, 123, 223, 323, 24, 124, 224, 324) sich in Umfangsrichtung von einem ersten der Schlitze (14, 15, 16) zu einem zweiten der Schlitze (14, 15, 16) erstrecken,
**dadurch gekennzeichnet,**
**dass**, in einer gedachten Abwicklung der Spreizhülse (10, 110, 210, 310), die erste Kante (23, 123, 223, 323) in Form eines Bogens zwischen dem ersten der Schlitze (14, 15, 16) und dem zweiten der Schlitze (14, 15, 16) verläuft und dass die zweite Kante (24, 124, 224, 324) in Form eines Bogens zwischen dem ersten der Schlitze (14, 15, 16) und dem zweiten der Schlitze (14, 15, 16) verläuft.

2. Spreizanker nach Anspruch 1, **dadurch gekennzeichnet, dass** die beiden Kanten (323, 324) in Längsrichtung in die gleiche Richtung gewölbt sind.

3. Spreizanker nach Anspruch 1, **dadurch gekennzeichnet, dass** die beiden Kanten (23, 123, 24, 124) in Längsrichtung in die entgegengesetzte Richtung gewölbt sind.

4. Spreizanker nach einem der vorstehenden Ansprüche, **dadurch gekennzeichnet, dass** mindestens eine der Kanten (23, 123, 323, 24, 124, 324) als Kreisbogen gewölbt ist.

5. Spreizanker nach einem der vorstehenden Ansprüche, **dadurch gekennzeichnet, dass** beide Kanten (23, 123, 24, 124) als Kreisbogen gewölbt sind und dass die beiden Kreisbögen der beiden Kanten (23, 123, 24, 124) unterschiedliche Radien aufweisen.

6. Spreizanker nach einem der vorstehenden Ansprüche, **dadurch gekennzeichnet, dass** die Schlitze (114, 115, 116) im Bereich des Endabschnitts (120) in Umfangsrichtung aufgeweitet sind.

7. Spreizanker nach einem der vorstehenden Ansprüche, **dadurch gekennzeichnet, dass** der Endabschnitt (20, 120, 220, 320) zum vorderen Ende (4) hin radial von der Längsachse (L) weg verläuft.

8. Spreizanker nach einem der vorstehenden Ansprüche, **dadurch gekennzeichnet, dass** die Kanten (23, 123, 223, 323, 24, 124, 224, 324) durch einen Prägevorgang hergestellt sind.

## Claims

1. An expansion bolt (1) that has a bolt shaft (2) with an expansion body (5) and an expansion sleeve (10, 110, 210, 310),
wherein the bolt shaft (2) extends from a rear end (3) in the insertion direction (E) forward along a longitudinal axis (L),
wherein the expansion sleeve (10, 110, 210, 310) is arranged in an expansion region (9) of the expansion bolt (1) at the front of the bolt shaft (2) and has a plurality of expansion segments (13, 113, 213, 313) which are separated from one another by slots in the circumferential direction,
wherein at least one of the expansion segments (13, 113, 213, 313) has an end portion (20, 120, 220, 320) of reduced wall thickness, which in a non-expanded state faces the expansion body (5) and which is delimited on the outside in the longitudinal direction by two of the slots (14, 15, 16) and in the circumferential direction by a first edge (23, 123, 223, 323) and a second edge (24, 124, 224, 324), wherein the two edges (23, 123, 223, 323, 24, 124, 224, 324) extend in the circumferential direction from a first of the slots (14, 15, 16) to a second of the slots (14, 15, 16),
**characterized in that**
in an imaginary development of the expansion sleeve (10, 110, 210, 310), the first edge (23, 123, 223, 323) extends in the form of an arc between the first of the slots (14, 15, 16) and the second of the slots (14, 15, 16), **and in that** the second edge (24, 124, 224, 324) extends in the form of an arc between the first of the slots (14, 15, 16) and the second of the slots (14, 15, 16).

2. The expansion bolt according to claim 1, **characterized in that** the two edges (323, 324) are curved in the same direction in the longitudinal direction.

3. The expansion bolt according to claim 1, **characterized in that** the two edges (23, 123, 24, 124) are curved in the opposite direction in the longitudinal direction.

4. The expansion bolt according to any of the preceding claims, **characterized in that** at least one of the edges (23, 123, 323, 24, 124, 324) is curved as a circular arc.

5. The expansion bolt according to any of the preceding claims, **characterized in that** both edges (23, 123, 24, 124) are curved as circular arcs, **and in that** the two circular arcs of the two edges (23, 123, 24, 124) have different radii.

6. The expansion bolt according to any of the preceding claims, **characterized in that** the slots (114, 115, 116) are widened in the circumferential direction in the region of the end portion (120).

7. The expansion bolt according to any of the preceding claims, **characterized in that** the end portion (20, 120, 220, 320) extends radially away from the longitudinal axis (L) towards the front end (4).

8. The expansion bolt according to any of the preceding claims, **characterized in that** the edges (23, 123, 223, 323, 24, 124, 224, 324) are produced by an embossing process.

## Revendications

1. Cheville d'ancrage à expansion (1) qui présente une tige d'ancrage (2) comportant un corps d'expansion (5) et une douille d'expansion (10, 110, 210, 310),
dans laquelle la tige d'ancrage (2) s'étend depuis une extrémité arrière (3) dans la direction d'insertion (E) vers l'avant le long d'un axe longitudinal (L),
dans laquelle la douille d'expansion (10, 110, 210, 310) est agencée dans une zone d'expansion (9) de la cheville d'ancrage à expansion (1) à l'avant de la tige d'ancrage (2), et présente plusieurs segments d'expansion (13, 113, 213, 313) qui sont séparés les uns des autres par des fentes dans la direction circonférentielle,
dans laquelle au moins l'un des segments d'expansion (13, 113, 213, 313) présente une section d'extrémité (20, 120, 220, 320) d'épaisseur de paroi réduite qui, dans un état non expansé, est tournée vers le corps d'expansion (5) et qui, sur le côté extérieur, est délimitée dans la direction longitudinale par deux des fentes (14, 15, 16) et délimitée dans la direction circonférentielle par un premier bord (23, 123, 223, 323) et un second bord (24, 124, 224, 324), dans laquelle les deux bords (23, 123, 223, 323, 24, 124, 224, 324) s'étendent dans la direction circonférentielle, d'une première des fentes (14, 15, 16) à une deuxième des fentes (14, 15, 16),
**caractérisée en ce**
**que,** dans une mise en oeuvre imaginaire de la douille d'expansion (10, 110, 210, 310), le premier bord (23, 123, 223, 323) s'étend en forme d'arc entre la première des fentes (14, 15, 16) et la deuxième des fentes (14, 15, 16), **et en ce que** le second bord (24, 124, 224, 324) s'étend en forme d'arc entre la première des fentes (14, 15, 16) et la deuxième des fentes (14, 15, 16).

2. Cheville d'ancrage à expansion selon la revendication 1, **caractérisée en ce que** les deux bords (323, 324) sont bombés en direction longitudinale, tous deux dans la même direction.

3. Cheville d'ancrage à expansion selon la revendication 1, **caractérisée en ce que** les deux bords (23, 123, 24, 124) sont bombés en direction longitudinale, tous deux dans la direction opposée.

4. Cheville d'ancrage à expansion selon l'une des revendications précédentes, **caractérisée en ce qu'**au moins l'un des bords (23, 123, 323, 24, 124, 324) est bombé en arc de cercle.

5. Cheville d'ancrage à expansion selon l'une des revendications précédentes, **caractérisée en ce que** les deux bords (23, 123, 24, 124) sont bombés en arc de cercle, et **en ce que** les deux arcs de cercle des deux bords (23, 123, 24, 124) présentent des rayons différents.

6. Cheville d'ancrage à expansion selon l'une des revendications précédentes, **caractérisée en ce que** les fentes (114, 115, 116) sont élargies en direction circonférentielle dans la zone de la section d'extrémité (120).

7. Cheville d'ancrage à expansion selon l'une des revendications précédentes, **caractérisée en ce que** la section d'extrémité (20, 120, 220, 320) s'étend radialement en s'éloignant de l'axe longitudinal (L) vers l'extrémité avant (4).

8. Cheville d'ancrage à expansion selon l'une des revendications précédentes, **caractérisée en ce que** les bords (23, 123, 223, 323, 24, 124, 224, 324) sont produits par un processus d'estampage.
